# EUROPÄISCHE PATENTANMELDUNG

(11) **EP 1 503 062 A1**
(43) Veröffentlichungstag der Anmeldung: **02.02.2005**
(21) Anmeldenummer: 04017191.0
(22) Anmeldetag: 21.07.2004
(51) Int. Cl.: F02D 9/10, F16K 27/02

(54) **Absperranordnung zum Absperren eines Fluidstroms**

(30) Priorität: 22.07.2003 DE 20311260 U
(71) Anmelder: Friedrich Boysen GmbH & Co. KG, D-72213 Altensteig (DE)
(72) Erfinder: Kornherr, Heinz, 71083 Herrenberg (DE); Stockinger, Karl, 72224 Ebhausen-Rotfelden (DE); Wellner, Friedrich, 72202 Nagold (DE)
(74) Vertreter: Manitz, Finsterwald & Partner GbR

(57) **Zusammenfassung**

Absperranordnung zum Absperren eines Fluidstroms, insbesondere Abgasstroms einer Kraftfahrzeugabgasanlage, mit einem Gehäuse (1), einer in dem Gehäuse (1) angeordneten, um eine quer zur Strömungsrichtung (I) verlaufende Achse (II) drehbaren Absperrklappe (2) und Mitteln (3) zur Betätigung der Absperrklappe (2), wobei zur Vermeidung von Störgeräuschen an der Innenwand (4) des Gehäuses (1) mindestens ein nach innen vorstehender Anschlag (5) für die Absperrklappe (2) vorgesehen ist, dessen Kontur einem Umfangsabschnitt der Absperrklappe (2) vorgesehen ist, dessen Kontur einem Umfangsabschnitt der Absperrklappe (2) entspricht, so dass die Absperrklappe (2) in Sperrstellung mit einem Randbereich an dem Anschlag (5) anliegt.

## Beschreibung

Die vorliegende Erfindung betrifft eine Absperranordnung zum Absperren eines Fluidstroms, insbesondere Abgasstroms einer Kraftfahrzeugabgasanlage, mit einem Gehäuse, einer in dem Gehäuse angeordneten, um eine quer zur Strömungsrichtung verlaufende Achse drehbaren Absperrklappe und Mitteln zur Betätigung der Absperrklappe

Abgasklappen in Kraftfahrzeugabgasanlagen sind seit langem bekannt und werden beispielsweise zum Absperren eines Zweiges der Abgasanlage eingesetzt. Die Betätigung erfolgt üblicherweise über eine Unterdruckdose. Ein Problem bei derartigen Abgasklappen besteht darin, dass Störgeräusche wie Zischeln oder Zwitschern entstehen können.

Der Erfindung liegt die Aufgabe zugrunde, eine Absperranordnung der eingangs genannten Art anzugeben, durch welche diese Probleme vermieden werden können.

Diese Aufgabe wird dadurch gelöst, dass an der Innenwand des Gehäuses mindestens ein nach innen vorstehender Anschlag für die Absperrklappe vorgesehen ist, dessen Kontur einem Umfangsabschnitt der Absperrklappe entspricht, so dass die Absperrklappe in Sperrstellung mit einem Randbereich an dem Anschlag anliegt.

Durch das Vorsehen eines Anschlages der genannten Art entsteht im geschlossenen Zustand ein langer, labyrinthartiger Dichtspalt zwischen der Absperrklappe und dem Gehäuse. Auf diese Weise können Störgeräusche wie Zischeln oder Zwitschern weitgehend unterdrückt werden. Darüber hinaus ist ein guter Verschluss gewährleistet.

Ein derartiger Anschlag ist bevorzugt an zwei einander gegenüberliegenden Seiten des Gehäuses vorgesehen, und die Anschläge erstrecken sich bevorzugt jeweils von einem Drehpunkt der Absperrklappe zum anderen, also jeweils im Wesentlichen über die Hälfte des Umfangs der Absperrklappe. Dies bewirkt einen labyrinthartigen Dichtspalt über den gesamten Umfang der Absperrklappe und ermöglicht dadurch eine besonders gute Unterdrückung von Störgeräuschen.

Die Anschläge können derart angeordnet sein, dass die Absperrklappe in Anschlagstellung einen Winkel von 90° mit der Strömungsrichtung einschließt. Die Anschläge können aber auch so angeordnet sein, dass die Absperrklappe mit der Strömungsrichtung einen kleineren Winkel einschließt, insbesondere ca. 80° bis ca. 85°. Ein kleinerer Winkel hat den Vorteil, dass der Stellweg geringer ist.

Das Gehäuse der Absperranordnung kann ein- oder mehrteilig ausgebildet sein. Bevorzugt ist das Gehäuse durch ein Rohrstück gebildet. Dies ist von der Herstellung unaufwändig.

Ebenfalls unaufwändig in der Herstellung ist die Ausbildung der Anschläge je durch einen Rohrausschnitt, also insbesondere als Halbschalen, bevorzugt hergestellt als Stanzprägeteil. Diese können auch besonders gut an ein rohrförmiges Gehäuse angepasst werden.

Die Absperrklappe ist bevorzugt beidseitig gelagert, insbesondere durch je eine Halbwelle. Dies erhöht die Funktionssicherheit der Absperranordnung.

Nach einer weiteren Ausgestaltung der Erfindung weist die Absperrklappe eine solche Stärke auf, dass die Halbwellen jeweils in eine Ausnehmung in der Absperrklappe eingesteckt werden können. Auch dies ist herstellungstechnisch günstig. Zur Fixierung der Halbwellen kann insbesondere eine Laser-Durchstechnaht verwendet werden.

Bevorzugt weist die Absperrklappe im ihre Drehachse umgebenden mittleren Bereich eine größere Stärke auf als in den beidseits darin anschließenden Bereichen. Dadurch kann einerseits eine ausreichende Stärke zur Einbringung der Ausnehmungen für die Halbwellen zur Verfügung gestellt und anderseits die Masse der Klappe gering gehalten werden.

Vorteilhaft ist es dabei, wenn die Bereiche verringerter Stärke mit zweifacher Punktsymmetrie zur Drehachse ausgebildet sind, so dass sich bei der Draufsicht in Richtung der Drehachse eine Art Z-Form der Absperrklappe ergibt. Es ergibt sich einerseits eine gleichmäßige Gewichtsverteilung und andererseits ein symmetrischer Anschlag der Absperrklappe.

Um eine einfache Zentrierung der Absperrklappe im Gehäuse zu erreichen, können die Halbwellen nach einer weiteren Ausgestaltung der Erfindung je einen Anschlag aufweisen. Zusätzliche Zentriermittel sind dadurch entbehrlich.

Die Absperrklappe kann ebenfalls ein- oder mehrteilig ausgebildet sein. Die Herstellung der Abgasklappen kann dabei vorteilhaft im Metallspritzgussverfahren erfolgen, wobei die Herstellung der Ausnehmungen für die Halbwellen insbesondere in den Spritzgussprozess integriert ist. Eine zusätzliche mechanische Bearbeitung kann dann entfallen. Diese Herstellung ist kostengünstig und führt zu einer hohen Maßgenauigkeit der Abgasklappe.

Die Lager für die Halbwellen sind bevorzugt aus Graphit, mit oder ohne Gewebeverstärkung, und/oder aus keramischen oder metallischen Lagerwerkstoffen gebildet. Derartige Werkstoffe haben sich als besonders geeignet herausgestellt.

In bestimmen Anwendungsfällen vorteilhaft ist die Verwendung eines separaten Lagerelementes für die Lagerung der Absperrklappe. Dabei kann das separate Lagerelement bevorzugt eine rotationssymmetrische Kontur aufweisen. Die Montage ist dadurch vereinfacht.

Ebenfalls in bestimmten Anwendungsfällen vorteilhaft ist eine konische Ausbildung der Lager.

Nicht beschränkende Ausführungsbeispiel der Erfindung sind in den Zeichnungen dargestellt und werden nachfolgend beschrieben. Es zeigen, jeweils in schematischer Darstellung:
- Fig. 1: eine perspektivische, teilweise geschnittene Darstellung einer erfindungsgemäßen Absperranordnung,
- Fig. 2: einen Schnitt durch die Absperranordnung von Fig. 1,
- Fig. 3: einen Querschnitt durch eine zweite Variante einer erfindungsgemäßen Absperranordnung,
- Fig. 4: einen Querschnitt durch noch eine Variante einer erfindungsgemäßen Absperranordnung, und
- Fig. 5: einen Schnitt durch einen Teil noch einer Variante einer erfindungsgemäßen Absperranordnung.

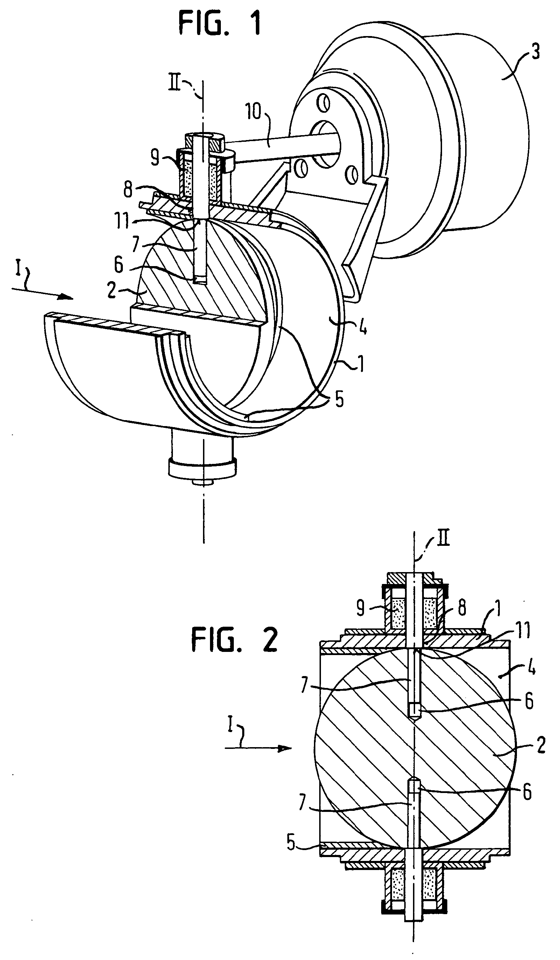

Die in den Fig. 1 und 2 dargestellte Absperranordnung umfasst ein rohrförmiges Gehäuse 1, in welchem eine Absperrklappe 2 um eine quer zur Strömungsrichtung I verlaufende Achse II drehbar gelagert ist. Seitlich am Gehäuse 1 ist eine Unterdruckdose 3 angebracht, über welche die Absperrklappe 2 betätigbar ist.

An der Innenwand 4 des Gehäuses 1 sind zwei Halbschalen 5 angeordnet, die als Anschlag für die Absperrklappe 2 dienen. Die Halbschalen 5 sind hierfür jeweils auf einander gegenüberliegenden Seiten des Gehäuses 1 angeordnet und in Strömungsrichtung I zueinander versetzt. Die Absperrklappe 2 schlägt dadurch in Schließstellung gleichzeitig an beiden Halbschalen 5 an.

Die Anordnung der Halbschalen 5 kann so gewählt sein, dass die Absperrklappe 2 in Schließstellung einen Winkel von 90° zur Strömungsrichtung I einschließt. Sie kann aber auch so gewählt sein, dass der Winkel kleiner ist als 90°, insbesondere zwischen ca. 80° und ca. 85° beträgt. Sowohl das Gehäuse 1 als auch die Absperrklappe 2 können ein- oder mehrteilig sein.

Die Absperrklappe 2 ist im Gehäuse 1 beidseitig gelagert. Hierfür weist die Absperrklappe 2 auf zwei voneinander abgewandten Seiten in ihrem Rand je ein Sackloch 6 auf, in welches je eine Halbwelle 7 eingesteckt ist. Die Halbwellen 7 sind in den Sacklöchern 6 jeweils bevorzugt durch eine Laser-Durchstechnaht befestigt. Die Halbwellen 7 sind über Durchtrittsöffnungen 8 aus dem Gehäuse 1 herausgeführt und durchgreifen außerhalb des Gehäuses 1 angeordnete Lagerbuchsen 9. Die Lager bestehen beispielsweise aus Graphit, mit oder ohne Gewebeverstärkung, und/oder aus keramischen oder metallischen Lagerwerkstoffen. Die Lagerbuchsen 9 weisen außerdem eine rotationssymmetrische Kontur auf.

An der in den Fig. 1 und 2 oben dargestellten Halbwelle 7 ist ein Betätigungsstößel 10 der Unterdruckdose 3 angelenkt. Auf diese Weise ist die obere Halbwelle 7 um die Achse II verdrehbar, und mit ihr die Absperrklappe 2 und die untere Halbwelle 7. Schließlich weisen die beiden Halbwellen 7 noch jeweils einen Anschlag 11 auf, über welche die Absperrklappe 2 im Gehäuse 1 zentriert wird.

Die Funktion der dargestellten Absperranordnung ist folgendermaßen: In Öffnungsstellung befindet sich die Absperrklappe 2 in der in den Fig. 1 und 2 dargestellten Stellung, in welcher sich die Ebene der Absperrklappe 2 parallel zur Strömungsrichtung I erstreckt. Der Durchflussquerschnitt des Gehäuses 1 wird dadurch freigegeben. Durch Betätigen der Unterdruckdose 3 kann die Absperrklappe 2 um die Achse II verdreht werden, bis ihre Randbereiche an den beiden Halbschalen 5 anschlagen. In dieser Stellung ist der Durchflussquerschnitt des Gehäuses 1 verschlossen. Es besteht dabei ein langer, labyrinthartiger Dichtspalt zwischen der Absperrklappe 2 und den Halbschalen 5 sowie der Innenwand 4 des Gehäuses 1, wodurch das Entstehen von Störgeräuschen wie Zischeln oder Zwitschern weitgehend verhindert wird.

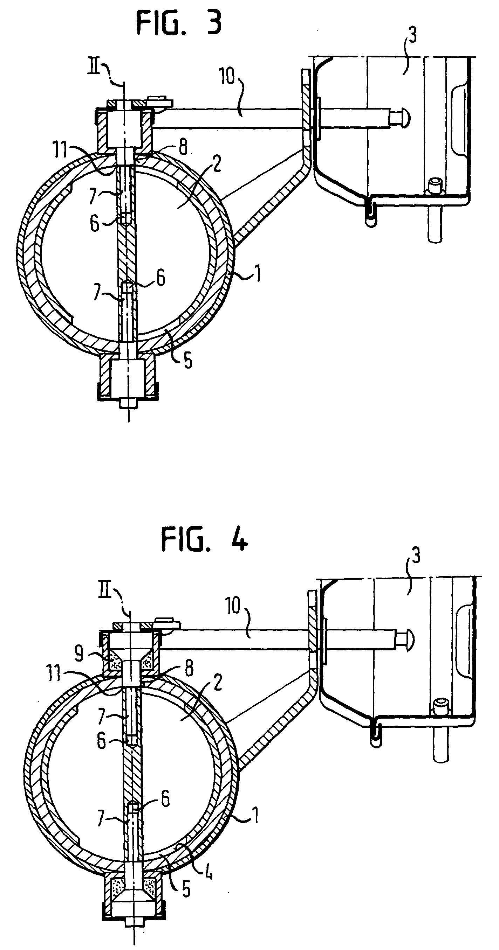

Die in Fig. 3 dargestellte Variante einer erfindungsgemäßen Absperranordnung stimmt weitgehend mit der Variante der Fig. 1 und 2 überein.

Ein wesentlicher Unterschied besteht darin, dass hier keine separate Lagerbuchsen zur Lagerung der beiden Halbwellen 7 vorgesehen sind. Die Funktionsweise ist dieselbe wie zuvor beschrieben.

Auch die in Fig. 4 dargestellte dritte Variante einer erfindungsgemäßen Absperranordnung stimmt weitgehend mit den beiden anderen Varianten überein. Bei dieser Variante sind wieder separate Lagerbuchen 9 vorgesehen, die allerdings eine konische Form aufweisen. Die Funktionsweise ist auch hier wie zur ersten Variante beschrieben.

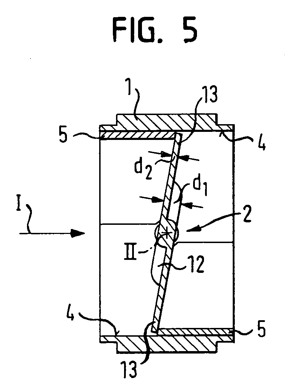

Die in Figur 5 dargestellte Variante zeigt eine Absperrklappe 2, die in ihrem die Drehachse II umgebenden mittleren Bereich 12 eine größere Stärke d₁ aufweist als in den beiden daran anschließenden Bereichen 13. Im mittleren Bereich 12 der Absperrklappe 2 sind wiederum die Sacklöcher 6 für die beiden Halbwellen 7 eingebracht. Die Stärke d₁ des mittleren Bereiches 12 ist entsprechend groß gewählt. Die beiden daran anschließenden Bereiche 13 weisen dagegen eine Stärke d₂ auf, die lediglich Festigkeitsgesichtspunkten genügen muss und daher geringer ist. Die Masse der Absperrklappe 2 ist dadurch verringert.

Wie man in Figur 5 außerdem sieht, ist die verringerte Stärke d₂ der Absperrklappe 2 in den Bereichen 13 so vorgenommen, dass sich in Draufsicht in Richtung der Drehachse II eine Art Z-Form der Absperrklappe 2 ergibt. Das heißt, die Rücknahme in der Stärke der Absperrklappe 2 ist einmal auf der einen Seite und einmal auf der anderen Seite der Absperrklappe 2 vorgenommen, die dadurch eine zweifache Punktsymmetrie um ihre Drehachse II erhält. Dadurch ergibt sich eine gleichmäßige Gewichtsverteilung und ein symmetrischer Anschlag an den Halbschalen 5.

Bei allen Ausführungsvarianten kann die Absperrklappe 2 im Metallspritzgussverfahren hergestellt sein. Sie erhält dadurch eine hohe Maßgenauigkeit bei verhältnismäßig geringen Herstellungskosten.

Alle Varianten der erfindungsgemäßen Absperranordnung zeichnen sich durch eine gute Dichtfunktion und geringe Geräuschentwicklung aus. Zudem ist die Herstellung unaufwändig und kostengünstig möglich.

### Bezugszeichenliste

- 1: Gehäuse
- 2: Absperrklappe
- 3: Unterdruckdose
- 4: Innenwand von 1
- 5: Halbschale
- 6: Sackloch
- 7: Halbwelle
- 8: Durchtrittsöffnung
- 9: Lagerbuchse
- 10: Betätigungsstößel
- 11: Anschlag
- 12: mittlerer Bereich von 2
- 13: Bereich von 2

- I: Strömungsrichtung
- II: Drehachse

- d₁: Stärke von 12
- d₂: Stärke von 13

## Patentansprüche

1. Absperranordnung zum Absperren eines Fluidstroms, insbesondere Abgasstroms einer Kraftfahrzeugabgasanlage, mit einem Gehäuse (1), einer in dem Gehäuse (1) angeordneten, um eine quer zur Strömungsrichtung (1) verlaufende Achse (II) drehbaren Absperrklappe (2) und Mitteln (3) zur Betätigung der Absperrklappe,
**dadurch gekennzeichnet,**
**dass** an der Innenwand (4) des Gehäuses (1) mindestens ein nach innen vorstehender Anschlag (5) für die Absperrklappe (2) vorgesehen ist, dessen Kontur einem Umfangsabschnitt der Absperrklappe (2) entspricht, so dass die Absperrklappe (2) in Sperrstellung mit einem Randbereich an dem Anschlag (5) anliegt.

2. Absperranordnung nach Anspruch 1,
**dadurch gekennzeichnet,**
**dass** an zwei einander gegenüberliegenden Innenseiten (4) des Gehäuses (1) ein solcher Anschlag (5) vorgesehen ist und/oder dass sich die Anschläge (5) jeweils von einem Drehpunkt der Absperrklappe (2) zum anderen erstrecken.

3. Absperranordnung nach einem der vorhergehenden Ansprüche,
**dadurch gekennzeichnet,**
**dass** der oder die Anschläge (5) derart angeordnet sind, dass die Absperrklappe (2) in Anschlagstellung einen Winkel von 90° mit der Strömungsrichtung (I) einschließt, oder derart, dass die Absperrklappe (2) in Anschlagstellung einen Winkel kleiner 90°, insbesondere ca. 80° bis ca. 85° mit der Strömungsrichtung (I) einschließt.

4. Absperranordnung nach einem der vorhergehenden Ansprüche,
**dadurch gekennzeichnet,**
**dass** das Gehäuse (1) ein- oder mehrteilig ausgebildet ist und/oder dass das Gehäuse (1) durch ein Rohrstück gebildet ist.

5. Absperranordnung nach einem der vorhergehenden Ansprüche,
**dadurch gekennzeichnet,**
**dass** der oder die Anschläge (5) je durch einen Rohrausschnitt gebildet sind, insbesondere durch Halbschalen, bevorzugt hergestellt als Stanzprägeteil.

6. Absperranordnung nach einem der vorhergehenden Ansprüche,
**dadurch gekennzeichnet,**
**dass** die Absperrklappe (2) beidseitig gelagert ist, insbesondere durch je eine Halbwelle (7).

7. Absperranordnung nach einem der vorhergehenden Ansprüche,
**dadurch gekennzeichnet,**
**dass** die Absperrklappe (2) eine solche Stärke aufweist, dass die Halbwellen (7) jeweils in eine Ausnehmung (6) in der Absperrklappe (2) eingesteckt werden können und/oder dass die Absperrklappe (2) im ihre Drehachse (II) umgebenden mittleren Bereich (12) eine größere Stärke (d₁) aufweist als in den beidseits daran anschließenden Bereichen (13), wobei die Bereiche (13) verringerter Stärke (d₂) bevorzugt mit zweifacher Punktsymmetrie zur Drehachse (II) ausgebildet sind, so dass sich bei Draufsicht in Richtung der Drehachse (II) eine Art Z-Form der Absperrklappe (2) ergibt.

8. Absperranordnung nach einem der vorhergehenden Ansprüche,
**dadurch gekennzeichnet,**
**dass** die Halbwellen (7) an der Absperrklappe (2) mittels einer Laser-Durchstechnaht befestigt sind und/oder dass die Halbwellen (7) je einen Anschlag (11) zur Zentrierung der Absperrklappe (2) im Gehäuse (1) aufweisen.

9. Absperranordnung nach einem der vorhergehenden Ansprüche,
**dadurch gekennzeichnet,**
**dass** die Absperrklappe (2) ein- oder mehrteilig ausgebildet ist und/oder dass die Absperrklappe (2) im Metallspritzgussverfahren hergestellt ist.

10. Absperranordnung nach einem der vorhergehenden Ansprüche,
**dadurch gekennzeichnet,**
**dass** die Lager für die Halbwellen (7) aus Graphit, mit oder ohne Gewebeverstärkung, und/oder aus keramischen oder metallischen Lagerwerkstoffen bestehen und/oder dass ein separates Lagerelement (9) für die Lagerung der Absperrklappe (2) vorgesehen ist, wobei das Lagerelement (9) insbesondere eine rotationssymmetrische Kontur und/oder eine konische Form aufweist.
